# EUROPÄISCHE PATENTSCHRIFT

(11) **EP 1 345 391 B1**
(45) Veröffentlichungstag und Bekanntmachung des Hinweises auf die Patenterteilung: **24.05.2006**
(21) Anmeldenummer: 02005676.8
(22) Anmeldetag: 12.03.2002
(51) Int. Cl.: H04M 1/03, H04M 1/02, H04R 7/04

(54) **Kommunikationsendgerät mit über Umlenkeinrichtungen betätigtem Flachlautsprecher**
Communication terminal including a flat loudspeaker operated over a turn arrengement
Terminal de communication contenant un haut-parleur plan actionné par un dispositf de dérivation

(43) Veröffentlichungstag der Anmeldung: 17.09.2003
(73) Patentinhaber: BenQ Mobile GmbH & Co. oHG, 81667 München (DE); BenQ Corporation, Gueishan Taoyuan 333 (TW)
(72) Erfinder: Pflaum, Karl-Heinz, 46395 Bocholt (DE)
(74) Vertreter: Krombach, Rainer

(56) Entgegenhaltungen:
- GB-A- 2 330 980
- GB-A- 2 360 901
- US-A1- 2001 026 625
- PATENT ABSTRACTS OF JAPAN vol. 2000, no. 24, 11. Mai 2001 (2001-05-11) & JP 2001 189978 A (AUTHENTIC LTD), 10. Juli 2001 (2001-07-10)

## Beschreibung

Die Erfindung bezieht sich auf ein mobiles Kommunikationsendgerät mit einer Anzeigeabdeckung, die als Flachlautsprecher ausgebildet ist, der über Aktuatoren zur Anregung von Biegeschwingungen des Flachlautsprechers an einem Gehäuse des mobilen Endgerätes angebracht ist.

Insbesondere bei zukünftigen Mobiltelefonen werden mehr und mehr multimediale Inhalte übertragen und wiedergegeben. Dies erfordert zum einen eine große Anzeige, zum anderen aber auch, Schall über einen großen Frequenzbereich mit geeignetem Schallpegel abzustrahlen. In diesem Zusammenhang werden bei den eingangs genannten mobilen Kommunikationsendgeräten Flachlautsprecher eingesetzt, bei denen eine Fläche zu Biegeschwingungen angeregt wird.

Bei als Flachlautsprecher ausgebildeter Anzeigeabdeckung ergibt sich jedoch bei existierenden mobilen Kommunikationsendgeräten das Problem, dass die Aktuatoren, mit denen diese Biegeschwingungen erzeugt werden, von außen sichtbar sind. Dies beruht darauf, dass bisher die Aktuatoren unmittelbar auf der Fläche des Flachlautsprechers angeordnet werden.

Aus der JP 2001 189978 geht ein Flachlautsprecher hervor, der zu Schwingungen angeregt wird, um Schallsignale abzustrahlen. Der Flachlautsprecher ist mit Anregungselementen ausgestattet, die eine flache Membran zu Schwingungen anregen. Zur Überbrückung eines Abstandes zwischen einem Angriffspunkt des Flachlautsprechers und einem Aktuator wird hier vorgeschlagen, stabförmige Zwischenelemente vorzusehen. Der Flachlautsprecher kann als Zubehör beispielsweise eines Monitors oder Fernsehgeräts eingesetzt werden und wird über einer Anzeigefläche mit Hilfe geeigneter Befestigungsmittel gehalten.

Ausgehend hiervon liegt der Erfindung die Aufgabe zugrunde, ein mobiles Kommunikationsendgerät zu schaffen, das mit einem Flachlautsprecher ausgestattet ist, bei dem die Aktuatoren von außen nicht sichtbar sind.

Diese Aufgabe wird bei dem eingangs genannten mobilen Kommunikationsendgerät dadurch gelöst, dass für wenigstens einen der Aktuatoren eine Umlenkeinrichtung zur Umsetzung einer translatorischen Hin- und Her-Bewegung des Aktuators in eine Bewegung des Flachlautsprechers vorgesehen ist.

Durch Vorsehen der Umlenkeinrichtung wird es möglich, den Aktuator oder die Gesamtzahl vorgesehener Aktuatoren außerhalb des durchsichtigen Flachlautsprechers anzuordnen, so dass sie von außen nicht sichtbar sind. Insbesondere kann die Umlenkeinrichtung so gestaltet sein, dass ihr Angriffspunkt am Flachlautsprecher zur Umsetzung der translatorischen Bewegung des Aktuators optisch möglichst wenig auffällt.

Bevorzugt ist der Aktuator außerhalb einer Öffnung des Gehäuses zur Aufnahme des Flachlautsprechers an dem Gehäuse angebracht. In diesem Fall ist sichergestellt, dass der Körper des Gehäuses den Aktuator gegenüber einer Sicht von außen verdeckt.

Bei einer Ausführungsform ist die Umlenkeinrichtung zum Umsetzen einer translatorischen Bewegung des Aktuators in eine Bewegung des Flachlautsprechers senkrecht zu seiner Ebene angeordnet. Alternativ ist es auch möglich, dass die Umlenkeinrichtung zur Umsetzung einer translatorischen Bewegung des Aktuators in eine translatorische Bewegung des Flachlautsprechers in seiner Ebene angeordnet ist. Die jeweilige Ausführung der Umlenkreinrichtung ergibt sich nach den Erfordernissen, die sich aus der relativen Lage des Aktuators zu dem Flachlautsprecher ergeben.

Ausführungsbeispiele der Erfindung werden nachfolgend anhand der Zeichnungen noch naher erläutert. Es zeigen:
- Figur 1: eine Teil-Querschnittsansicht eines Flachlautsprechers mit zugehörigen Aktuator und einer ersten Ausführungsform einer Umlenkeinrichtung und
- Figur 2: eine Teil-Querschnittsansicht eines

Flachlautsprechers mit zugehörigem Aktuator und einer zweiten Ausführungsform einer Umlenkreinrichtung.

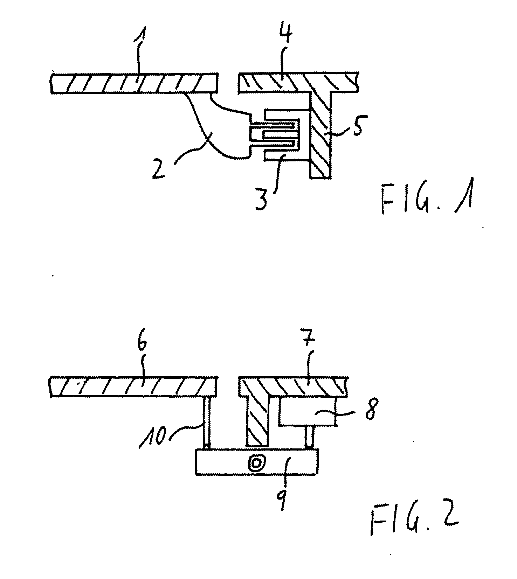

Figur 1 veranschaulicht eine als Flachlautsprecher ausgebildete Anzeigeabdeckung 1, die zur Abstrahlung von Schallwellen geeignet und in einer Gehäuseöffnung eines mobilen Kommunikationsendgerätes angeordnet ist. Am Rand der Anzeigeabdeckung 1 ist eine Umlenkeinrichtung 2 mit ihrem einen Ende befestigt, während das andere Ende der Umlenkeinrichtung 2 mittels eines Aktuators 3 betätigbar ist.

Ein Gehäuseabschnitt 4 eines Kommunikationsendgerätes, zu dem auch die Anzeigeabdeckung 1, die Umlenkeinrichtung 2 und der Aktuator 3 gehören, schließt unter Freilassung eines Spaltes an die Anzeigeabdeckung 1 an. Der Aktuator 3 ist unterhalb des Gehäuseabschnittes 4 und seitlich von der Anzeigeabdeckung 1 angeordnet, so dass er in Bezug auf das Kommunikationsendgerät von außen nicht sichtbar ist.

Der Aktuator 3 führt zur Anregung von Biegewellen eine translatorische Hin- und- Her-Bewegung durch, die im wesentlichen parallel zu der Ebene der Anzeigeabdeckung 1 verläuft. Diese Bewegung wird auf das dem Aktuator 3 zugeordnete Ende der Umlenkeinrichtung 2 übertragen. Da die Umlenkeinrichtung 2 aus starrem Material hergestellt ist, wird die Bewegung des Aktuators 3 hinsichtlich ihrer Richtung ungeändert auf einen Befestigungspunkt der Umlenkeinrichtung 2 an der Anzeigeabdeckung 1 übertragen, so dass die Anzeigeabdeckung 1, die an ihrem Rand beispielsweise mittels weiterer gleichartiger Aktuatoren gelagert ist, nach außen oder nach innen gekrümmt wird.

Der Aktuator 3 ist an einem weiteren Gehäuseabschnitt 5 des Kommunikationsendgerätes, das hier als Beispiel für ein Gerät dient, bei dem die Erfindung einsetzbar ist, befestigt.

Aus der Figur 2 geht eine Ausführungsform der Erfindung hervor, die sich gegenüber derjenigen aus der Figur 1 in erster Linie durch die Funktionsweise einer Umlenkeinrichtung unterscheidet. Wiederum ist eine Anzeigeabdeckung 6 als Flachlautsprecher ausgebildet, der bei Anregung mit Biegewellen Schallsignale aussendet. Ein Gehäuseabschnitt 7 schließt sich in der Ebene der Anzeigeabdeckung 6 unter Freilassung eines Spalts an derselben an. Auf der Innenseite des Gehäuseabschnitts 7 ist ein Aktuator 8 vorgesehen, dessen beweglicher Teil eine translatorische Hin- und Her-Bewegung im wesentlichen senkrecht zu der Anzeigeabdeckung 6 durchführt. Der bewegliche Teil des Aktuators 8 betätigt einen Hebel 9, an dem der bewegliche Teil des Aktuators 8 angebracht ist und der etwa in seinem Mittenbereich schwenkbar an dem Gehäuseabschnitt 7 gelagert ist. In einer Ausgangslage des Aktuators 3 verläuft der Hebel im wesentlichen parallel zu der Anzeigeabdeckung 6.

Das dem Aktuator 8 abgewandte Ende des Hebels 9 ist mit einem Betätigungsglied 10 versehen, das mit seinem einem Ende am Rand der Anzeigeabdeckung 6 und mit seinem anderem Ende an dem Hebel 9, und zwar in seinem Endbereich, angebracht ist.

Bei einer Betätigung des Aktuators 8 wird dessen Hin- und Her-Bewegung in eine entsprechende Hin- und Her-Bewegung des Randes der Anzeigeabdeckung 6 umgesetzt, wodurch die Anzeigeabdeckung 6 zu Biegeschwingungen angeregt wird. Der Hebel 9 ist somit als Ausführungsform für eine Umlenkeinrichtung anzusehen.

Sowohl der bewegliche Teil des Aktuators 8 als auch das Betätigungsglied 10 sind derart an dem Hebel 9 befestigt, dass etwaige Auslenkungen des Hebels 9 aus einer in Figur 2 horizontalen Lage ermöglicht werden. Beispielsweise sind der bewegliche Teil des Aktuators 8 und das Betätigungsglied 10 an dem Hebel 9 angelenkt. Die Enden des Hebels 9 sind allgemein zur Übertragung von sowohl Zug- als auch Druckkräften ausgebildet.

Auch bei der Ausführungsform nach der Figur 2 ist die als Hebel 9 ausgebildete Umlenkeinrichtung von außen nicht sichtbar, da der Gehäuseabschnitt 7 sowohl den Hebel 9 als auch den Aktuator 8 abdeckt.

Bei einer Alternative der Ausführungsform nach Figur 2 kann eine Umlenkeinrichtung auch derart ausgebildet sein, dass die Bewegung des Randes einer Anzeigeabdeckung gleichläufig mit derjenigen eines beweglichen Teils eines Aktuators ist. Bei dieser Ausführungsform können der Rand der Anzeigeabdeckung und das bewegliche Teil des Aktuators beispielsweise über ein starres, im wesentlichen U-förmiges Element miteinander verbunden sein, wobei der Aktuator ähnlich wie der Aktuator 8 aus der Figur 2 angeordnet ist.

Die oben beschriebenen Aktuatoren 5, 8 können beispielsweise piezoelektrische oder elektromagnetische Aktuatoren sein.

## Patentansprüche

1. Mobiles Kommunikationsendgerät mit einer Anzeigeabdeckung (1), die als Flachlautsprecher ausgebildet ist, der über Aktuatoren (3; 8) zur Anregung von Biegeschwingungen des Flachlautsprechers an einem Gehäuse des mobilen Endgeräts angebracht ist,
**dadurch gekennzeichnet,**
**dass** für wenigstens einen der Aktuatoren (3, 8) eine Umlenkeinrichtung (2; 9) zur Umsetzung einer translatorischen Hin- und Her-Bewegung des Aktuators (3; 8) in eine Bewegung des Flachlautsprechers vorgesehen ist.

2. Kommunikationsendgerät nach Anspruch 1,
**dadurch gekennzeichnet,**
**dass** der Aktuator (3; 8) außerhalb einer Öffnung des Gehäuses zur Aufnahme des Flachlautsprechers an dem Gehäuse angebracht ist.

3. Kommunikationsendgerät nach einem der Anspruche 1 oder 2,
**dadurch gekennzeichnet,**
**dass** die Umlenkeinrichtung (9) zum Umsetzen einer translatorischen Hin- und Her-Bewegung des Aktuators (8) in eine Bewegung des Flachlautsprechers senkrecht zu seiner Ebene angeordnet ist.

4. Kommunikationsendgerät nach einem der Anspruche 1 oder 2,
**dadurch gekennzeichnet,**
**dass** die Umlenkeinrichtung (2) zur Umsetzung einer translatorischen Hin- und Her-Bewegung des Aktuators (3) in eine translatorische Hin- und Her-Bewegung des Flachlautsprechers in seiner Ebene angeordnet ist.

## Claims

1. Mobile communication terminal having a display cover (1) which is in the form of a flat loudspeaker which is fitted on a housing of the mobile terminal by means of actuators (3; 8) for inducing flexural oscillations in the flat loudspeaker,
**characterized**
**in that** a deflection device (2; 9) is provided for at least one of the actuators (3; 8) in order to convert a translatory to and fro movement in the actuator (3; 8) into a movement in the flat loudspeaker.

2. Communication terminal according to Claim 1,
**characterized**
**in that** the actuator (3; 8) is fitted on the housing outside an opening in the housing for holding the flat loudspeaker.

3. Communication terminal according to either of Claims 1 and 2,
**characterized**
**in that** the deflection device (9) is arranged at right angles to the plane of the flat loudspeaker in order to convert a translatory to and fro movement in the actuator (8) into a movement in the flat loudspeaker.

4. Communication terminal according to either of Claims 1 and 2,
**characterized**
**in that** the deflection device (2) is arranged in the plane of the flat loudspeaker in order to convert a translatory to and fro movement in the actuator (3) into a translatory to and fro movement in the flat loudspeaker.

## Revendications

1. Terminal de communication mobile comprenant un couvercle d'affichage (1) qui est formé comme haut-parleur plat placé sur un boîtier du terminal mobile pour l'excitation d'oscillations de flexion du haut-parleur plat par l'intermédiaire d'actuateurs (3 ; 8),
**caractérisé en**
**qu'**un dispositif de dérivation (2 ; 9) est prévu pour au moins un des actuateurs (3, 8) pour convertir un mouvement de va-et-vient translatoire de l'actuateur (3, 8) en un mouvement du haut-parleur plat.

2. Terminal de communication selon la revendication 1,
**caractérisé en ce**
**que** l'actuateur (3 ; 8) est installé en dehors d'une ouverture du boîtier destinée au logement du haut-parleur plat sur le boîtier.

3. Terminal de communication selon l'une des revendications 1 ou 2,
**caractérisé en ce**
**que** le dispositif de dérivation (9) pour convertir un mouvement de va-et-vient translatoire de l'actuateur (8) en un mouvement du haut-parleur plat est disposé verticalement par rapport à son plan.

4. Terminal de communication selon l'une des revendications 1 ou 2,
**caractérisé en ce**
**que** le dispositif de dérivation (2) pour convertir un mouvement de va-et-vient translatoire de l'actuateur (3) en un mouvement de va et vient translatoire du haut-parleur plat est disposé dans son plan.
